# EUROPEAN PATENT APPLICATION

(11) **EP 2 098 806 A1**
(43) Date of publication of application: **09.09.2009**
(21) Application number: 07866386.1
(22) Date of filing: 27.12.2007
(51) Int. Cl.: F24J 2/54, F24J 2/38

(54) **BIDIRECTIONAL SOLAR TRACKER**

(30) Priority: 29.12.2006 ES 200603326; 20.04.2007 ES 200700819 U; 20.04.2007 ES 200700825 U; 02.08.2007 ES 200702164
(71) Applicant: Hispanotracker, S.L., 30550 Abaran Murcia (ES)
(72) Inventor: CARRASCO MARTÍNEZ, Carlos María, E-30001 Murcia (ES)
(74) Representative: Ungria Lopez, Javier
(86) International application number: PCT/ES2007/000761
(87) International publication number: WO 2008/084121

(57) **Abstract**

The tracker is formed by a structure (3) bearing a platform (1) carrying the solar panels (2) that varies both the azimuth and elevation orientation thereof in order to track the sun. This movement is achieved by means of two actuators (4) connected respectively to fixed points (P1°, P2°) on the ground and other vertices (P1, P2) of the platform (1), thereby causing the platform to rotate around a central support point "O" of the same. The distances (D1, D2) between the points which join the actuators (4) have a one-to-one relation with the rotation angles (β, α) of the platform (1) around both perpendicular axes: an oblique fixed axis (O-Cl) and another axis (0-Az) that angularly varies the inclination thereof with respect to the first.

## Description

### OBJECT OF THE INVENTION

The present invention relates to a bidirectional solar tracker which contributes notable relevant characteristics and technical advantages with regard to those currently existing for the production of electrical energy by means of solar panels.

The main object of the invention is to offer a support structure for a platform carrying the solar panels, such that this platform is orientated towards the sun according to a novel form of movement, with a functioning that is smooth and simple, yet efficient.

In the current field of exploiting renewable energies, there exists a great increase at the world level in solar energy facilities that use photovoltaic panels (solar panels), which convert that energy into electrical energy. The installation of these panels is normally done on fixed structures orientated towards the south, with a degree of inclination on the horizon that depends on the latitude of the place.

The production of electrical energy by a panel depends on the actual characteristics of that panel and on the radiation received from the sun, which is equal to the solar radiation at that moment multiplied by the cosine formed by the perpendicular to the surface of the panel with the direction of the solar rays, the direction of which varies according to the time of day and the day of the year, as well as the latitude of the place.

In solar panel facilities installed on structures fixed to the ground, the exploitation of the solar radiation is not the maximum that could be obtained, since the direction of the perpendicular to the panel only coincides with that of the solar rays on a few occasions. In order to optimize the maximum energy output of the panels they need to be mounted on mobile structures which constantly position them perpendicular to the sun.

These mobile structures are known by the name of solar trackers.

It is also an object of the invention to provide the inventive solar tracker with a device for prevention of damage caused by the wind and thereby avoid any imperfections or damage being caused to the solar tracker.

It is also an object of the invention to provide the solar tracker with a device that permits the pressure in the hydraulic actuators to be regulated and thereby periodically modify the position of the platform and therefore of the solar panels, in order to permanently obtain an orientation perpendicular to said solar panels with respect to the solar rays, permitting maximum solar power to be obtained at any moment.

### BACKGROUND OF THE INVENTION

Within the current types of solar tracker, there primarily exist models known as "monodirectional" and "bidirectional".

Monodirectional solar trackers are characterized by having a fixed angle of elevation above the horizon and varying the azimuth angle with the time of day in order to follow the sun, while bidirectional solar trackers very both the azimuth angle and the angle of elevation during the daily travel of the sun, continually positioning the solar or photovoltaic panel in a direction perpendicular to the solar rays, thereby achieving net annual outputs that are around 20-30% greater than fixed facilities (depending on the latitude of the place and the annual hours of sunlight there).

For the movement of these bidirectional solar trackers, there exist various ways of doing this on the market, the most used being those that have a rotation around a vertical axis for the azimuth orientation and another rotation around a horizontal axis for the elevation orientation.

The movement of these rotation is normally done:
- the azimuth, by producing rotations of about 180° by means of a crown and pinion, or worm, which are electrically or hydraulically actuated.
- for elevation, by means of a hydraulic spindle or actuator, or also by means of a crown and pinion or worm.

Moreover, in order to provide for the effects of strong winds or even hurricanes on the solar trackers, wind gauges need to be provided so that, when the wind exceeds a safety speed an emergency action is started up in the tracker's movement system, which acts on it so that the support platform for the solar panels remains in the horizontal position, since close to the ground the direction of the wind is also appreciably horizontal and so the resistance of the panels to the wind becomes as little as possible, hereby avoiding possible damage or breakage of certain parts or elements of the facility.

Although the systems referred to and based on the concept mentioned above are functionally efficient, they nevertheless present a series of drawbacks that can be summarized as follows:
- It is not possible to make any exact aerodynamic calculations, since the shapes of the tracker are not at all similar to standardized profiles, so the data that would be obtained from a test in a wind tunnel would differ from the conditions in the field, where it is impossible to simulate the turbulence owing to the undulations of each specific field. In any case, the calculations are always orientative and so the emergency limit speed has to be reduced, with the consequent reduction in energy production.
- In those cases in which the direction of the wind is parallel to the solar panels, the system will move to the horizontal position even when this is not necessary , thus reducing the energy output.
- Even in the case of installing a wind gauge for each solar tracker, there exists a risk of vertical whirlwinds produced by thermal differences which, if they strike the surface of the tracker at one of its ends, might not be detected by the wind gauge, and a large torque or torsion would be produced due to a symmetric load which would cause serious damage to the solar tracker.

It must also be borne in mind that, in the event of the solar trackers being faced with strong winds, gusts or even hurricanes, even when they are fitted with a system for damage prevention starting from a certain speed considered to be the emergency speed and the solar panels are positioned horizontally, strong peak forces are nevertheless produced at the points of attachment between the mobile and fixed parts. Furthermore, in the case of turbulent winds or gusts that can produce what is known as the "flutter" effect, there can even exist a wind speed starting from which the system will start to resonate, with the corresponding collapse of the structure.

### DESCRIPTION OF THE INVENTION

In general terms, the bidirectional solar tracker proposed by the invention achieves the orientation of the platform carrying the solar panels by being arranged on a support structure, in such a way that it can rotate and orientate itself with combined movements of rotation about two axes: one of them oblique and fixed to the ground forming a certain angle with the OY coordinate axis parallel to the surface of the ground and which points in the southerly direction; and the other axis perpendicular to the previous one, contained in the plane of the platform and which varies its angle of inclination when the platform varies its angle about the fixed oblique axis.

This movement is carried out with two actuators respectively connected to separate fixed points of the ground and to the same number of vertices of the platform, causing the latter to rotate about a central support point thereof in the support structure and from an initial position to another final position, having two degrees of freedom since the final position of said two vertices of the platform is determined with the two angles of rotation thereof.

This causes the distance of the said vertices to the respective fixed points of the ground to maintain a one-to-one relation with the angles of rotation of the platform about the two perpendicular axes, which means that for each pair of angles there exists just one pair of said distances and vice versa. The distances are calculated for a defined value of the angles described depending on the coordinates of the place, the time of year and moment of the day, with the adjustment being carried out by the actuators.

Said actuators, thanks to which the correct distances between the respective points joining them are able to be adjusted, can be hydraulic cylinders, spindles or any other suitable mechanical element, preferably being hydraulic systems.

The orientation of the platform is also possible by means of tracking devices with light-point feedback since, with increments in opposite sign of the distances between the points being considered, the angle around the fixed axis manages to be varied (with a very small variation in the angle rotated about the axis, orientable in its angle and perpendicular to that axis) and with equal increments of the same sign an angular variation in the platform is achieved about the axis, orientable in its angle and perpendicular to that axis, and which is done with much less variation in the other angle (for small movements). According to this, with a few alternative reiterated movements the platform manages to be centered on the light point.

One way of achieving the securing of the platform carrying the solar panels to the structures fixed to the ground, in order to obtain smooth movements about the said two axes and functioning as a swivel joint, is based on using a frame consisting of stringers and cross-members which can rotate about a transverse axis which is longitudinally traversed by the cross-member corresponding to a "T" support that is secured to two struts emerging from the fixing structure to the ground, so that the platform will remain at a certain height and can tilt and rotate in order to carry out the solar tracking, as has been said earlier.

The "T" support is rotationally secured by means of a traversing axis longitudinal to its core or vertical section of this T-shape. The ends of the axes, or respective half-axes, are secured to the ends of the fixed struts. This arrangement allows the platform to be able to rotate around the latter axis by means of the actuators and also, once this angular position has been reached, or simultaneously with it, the platform can rotate around the first shaft, simply by shortening or lengthening the amplitude of the actuators by the appropriate magnitude and direction, which is carried out by automatic electrical or mechanical control.

The solar tracker is furthermore complemented with a device connected to the hydraulic system of the actuators, this device being based on one or more pressure switches duly installed, which, by virtue of the specific relation that exists between the pressure and the stress, supply a signal that will indicate the exact moment in which the platform for the solar tracker has to be located horizontally so that it can offer the least resistance to the wind and thereby avoid possible damage or breakage of the facility, which could occur due to the effects of strong and/or hurricane winds.

The pressure switch or switches will be connected to the corresponding hydraulic system with the aim of detecting the increase in pressure and acting as a consequence, sending a signal or order to the actuators which produce the movement of the platform, so that it can act and place the solar tracker in the horizontal position.

By means of said device, in the event of any contingencies like that mentioned, the system is successfully placed in a horizontal position when a real force established as being the safety limit force is reached, in accordance with the corresponding calculation for the structure, and not in an estimated way as would be the case of using wind gauges for that same purpose.

Likewise, on the basis of said device, the system (platform for the solar tracker) will maintain its tracking position for the sun, even in the case of high wind speeds when the wind blows in directions parallel to the solar panels, with the consequent increase in energy output.

Likewise, on the basis of the device, an emergency signal will be generated that will preserve the safety of the solar tracker, even in the case of vertical whirlwinds and when these affect just part of the surface.

On the basis of said device a series of advantages are achieved among which the following can be highlighted:
1.- Economic saving, since the cost of a pressure switch is less than that of a wind gauge.
2.- Longer useful life of the system since there are no moving parts that are constantly rotating whenever there is a wind.
3.- Greater reliability.

Provision has also been made for a device for regulating the working pressure of the hydraulic system in the strict sense, on the basis of which the movement of the platform for the solar tracker is established.

Specifically, the regulating device has the aim of the platform with the solar or photovoltaic panels being able at each moment to adopt the appropriate orientation so that the sun's rays impinge perpendicularly on those solar panels and thereby produce the maximum exploitation of solar energy, indeed, the maximum output from the solar tracker in question.

Specifically, the regulating device is intended to regulate the working pressure of the hydraulic system effecting the movement of the platform for the solar tracker, this regulation being carried out in all cases in which, for whatsoever reason, a sudden Increase takes place in the hydraulic pressure of the system, with a momentary discharge of that overpressure occurring on account of the actual regulating device.

In that regard, the regulation device will consist of a pair of oleo-pneumatic expansion tanks, comprising separate oleo-pneumatic dampers connected to the actual hydraulic system facility, in parallel with the hydraulic fluid lines. Said oleo-pneumatic damper tanks include an internal membrane as a pressure regulating element, on the basis of which, when there exists an overpressure in the system, a discharge of fluid takes place via a calibrated hole provided in the actual damper or tank in which two chambers are established, one for gas and the other, for example, for oils, in such a way that the oil originated in the overpressure produced by the hydraulic system is evacuated via that hole.

On the basis of the regulating device being described, an appreciable reduction is achieved in the forces exerted on the fixed structure of the solar tracker, for example, in the case of strong winds or in the case of a halt to the movement of the mobile structure with the solar panels, since the halt is not instantaneous, with the phenomena of fluttering and resonance that can and usually are produced by the effect of the wind likewise being reduced.

Finally, it can be said that the fluid lines to which the oleo-pneumatic dampers of the regulating device are connected include separate controlled non-return valves which order the entrance of fluid to the corresponding actuation hydraulic cylinder of the corresponding hydraulic system.

With the said regulating device, the advantages obtained are numerous, and one can cite the following as being the most important of them:
1.- Appreciable reduction in the forces on the fixed structure of the tracker, both in the case of a halt to the movement of the mobile structure or platform with the solar panels, and in the case of a gust of wind, permitting a small deformation until it passes, since in the case of a halt to the movement of the structure the stoppage itself is not instantaneous.
2.- Virtually total reduction in the phenomena of fluttering and resonance due to the effect of the wind on the system, since the kinetic energy acquired by the hydraulic oil in the form of heat is dissipated, avoiding unnecessary stresses on the system, such as the danger of entering into resonance which would destroy the facility or the actual solar tracker.
3.- Since the oleo-pneumatic damper is in movement, the critical speed for flutter increases appreciably.

### BRIEF DESCRIPTION OF THE DRAWINGS

In order to facilitate the understanding of the characteristics of the invention and forming an integral part of this descriptive specification, some sheets of plans are attached in which figures the following has been represented by way of illustration and non-limiting:
**Figure 1****.-** Shows a diagram of the system of movement of the bidirectional solar tracker, the object of the invention.
**Figure 2****.-** Shows a view similar to that of figure 1, including the cylinders constituting the actuators in order to vary the distances of two of the vertices of the platform from the respective fixed points of the ground.
**Figure 3****.-** Shows a perspective view of the bidirectional solar tracker of the invention, according to an example of practical embodiment.
**Figure 4****.-** Shows a view in elevation of the assembly represented in figure 3.
**Figure 5****.-** Shows a partial view in perspective of the connection of the platform carrying the solar panels to the corresponding support structure fixed to the ground.
**Figure 6****.-** Shows a schematic view in perspective of a frame on which the platform with the panels will be located, said frame resting on a fixed support structure in such a way that it can rotate with two degree of freedom, the frame being in a position that is practically horizontal (when the sun is overhead).
**Figure 7****.-** Shows a view like that of figure 6, in a rotated position of the frame around the cross-member of the "T" support for securing to the struts of the fixed structure.
**Figure 8****.-** Shows a view like that of figure 6, in a rotated position around the core or vertical cross-member of the "T" support.
**Figure 9****.-** Shows a view like that of figure 8, once the frame has rotated, first around an axis and then around another perpendicular axis.
**Figure 10****.-** Shows a schematic view corresponding to the device incorporated by the solar tracker of the invention, in order to prevent damage caused by the wind.
**Figure 11****.-** Shows the arrangement corresponding to the regulating device for the pressure in the hydraulic system for movement of the solar tracker forming the object of the invention.

### PREFERRED EMBODIMENT OF THE INVENTION

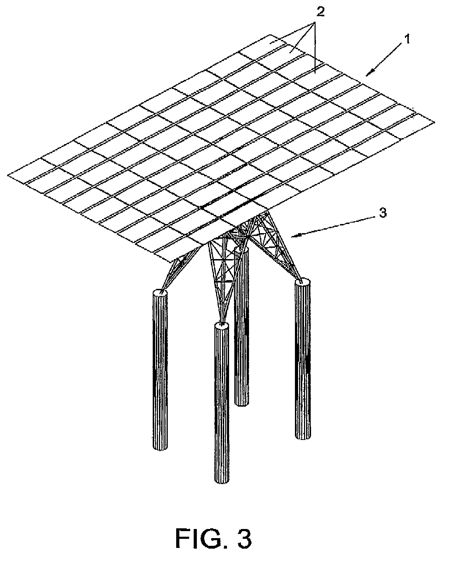

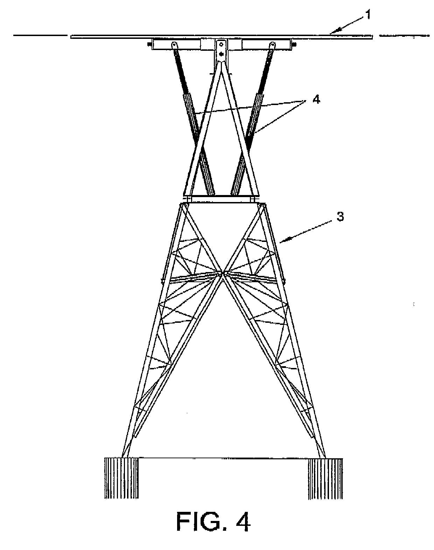

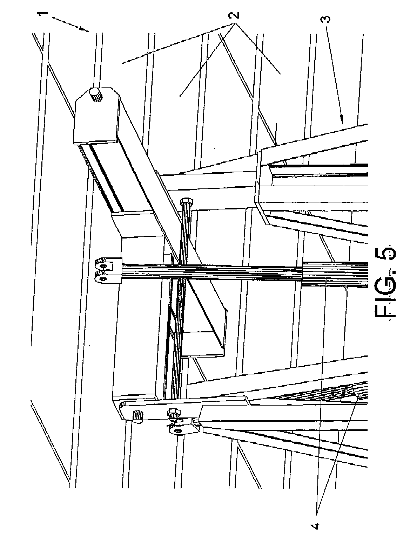

Making reference to the numbering adopted in the figures and especially in relation to figures 3 to 5, a platform 1 can be seen carrying the solar panels 2, and connected to a support structure 3 fixed to the ground.

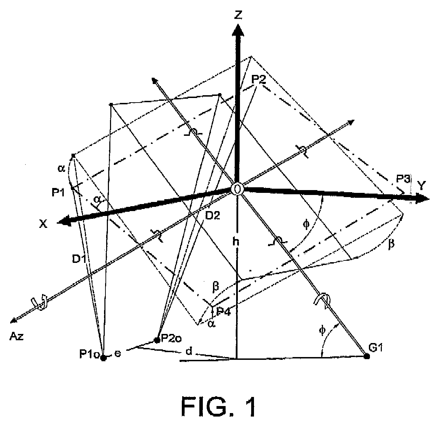

Figure 1 shows schematically the platform 1 defined by four vertices thereof, or four fixed points of it in the environs of the point "O" in which said platform 1 can rotate, this point "O" being located at a height "h" from the ground.

The X, Y, Z axes are the local coordinate axes, where:
- OX is the axis parallel to the surface of the ground which points in the westerly direction from the coordinate origin O, this being the elevated point of the ground as a cusp of a rigid support structure where the platform 1 rests, rotates and is orientated.
- OY is the axis parallel to the surface of the ground pointing in the southerly direction.
- OZ is the axis perpendicular to the surface of the ground in the vertical direction.

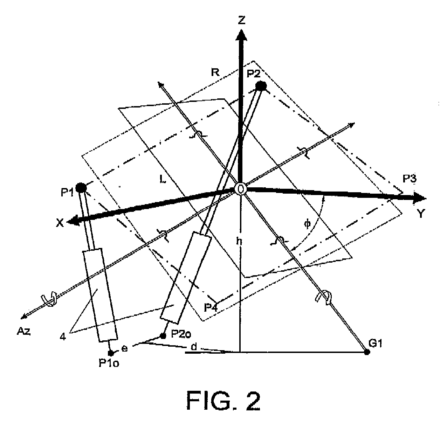

It can be noted that the initial position (prior to rotating any axis) of said platform 1 corresponds in figures 1 and 2 to the rhomboid represented with a solid line.

Once rotated, the platform 1 is as defined by the points P1, P2, P3, P4 in said figures 1 and 2.

In order to arrive at this position:
- First a rotation through angle β is made about the fixed or ground axis O-G1 (this is in the southerly direction forming an angle Φ with the axis O-Y).
- It then turns through an angle α around the axis 0-Az (this axis turns as the previous rotation is made).

It is important to highlight the fact that the system only has two degrees of freedom, which means that the points P1 and P2 are perfectly defined (for fixed geometric dimensions) with the two angles of rotation.

This implies that between the distances D1 (from point P1 to fixed point P1o), D2 (from point P2 to fixed point P2o), and the angles α and β, there exists a one-to-one relation and therefore for each pair of angles α and β there only exists one pair of distances D1 and D2, and vice versa.

Of course, there exist certain geometric limitations that confine the movement of points P1 and P2 to certain regions of space where this is possible (for example, there does not exist any combination of angles in which we can position said points 1 km from the tracker).

With the correct choice of the geometric dimensions it is possible to optimize both the correct tracking of the sun and the reduction in stresses of the different mechanical elements of the system.

According to the above, tracking of the sun is possible bidirectionally with said movement by the tracker.

In order to achieve certain angles α and β, which orientate the platform perpendicular to the sun, it will suffice to calculate the distances D1 (from one of the vertices of the rectangular platform or from a selected point of its periphery as far as a fixed point on the ground) and D2 (from the other chosen vertex or point as far as the other point of the ground) which gives us those angles, and once these have been determined, it suffices to locate an actuator or device, which can be a hydraulic cylinder, a spindle or any other mechanical element that will determine a distance for us, in order to fix the distances D1 and D2.

The orientation of the platform is also possible by means of tracking devices with light-point feedback, already existing on the market, since, with increments in opposite sign of the distances D1 and D2 the angle β manages to be varied (with a very small variation in the angle α) and with equal increments of the same sign the same thing occurs with the angle α, so that the variation in the other corresponding angle can be considered to be much lower (for small movements) and in a few alternative reiterated movements the platform manages to be centered on the light point.

In order to achieve the desired variation of the platform 1, as has been mentioned earlier, actuators can be used consisting of hydraulic cylinders, spindles or other mechanical elements for fixing and controlling the distance between those points (vertex of the platform and securing point in the ground, there existing another identical actuator between the other contiguous vertex and the other fixed point of the ground). When the distances are varied in a combined way in positive and negative values, as appropriate, all the positions desired at any moment for the platform are perfectly and precisely achieved.

In figure 2, the same platform 1 can be seen as in figure 1, but including the actuators consisting of separate hydraulic cylinders 4, which extend between the vertices P1 and P2 of the platform 1 and respective fixed points of the ground referenced with P1o and P2o, which are a distance "e" away. The line joining the said points P1o and P2o is provided at a distance "d" from the vertical of the point "O".

In a practical example, the following results have been obtained:
Data day, place and dimensions

| | |
|---|---|
| Latitude | 40 °N |
| Day | 12 May |
| Local time 8: | 18 |
| Fi | 50 |
| R | 1000 mm |
| L | 1000 mm |
| h | 1451 mm |
| d | 1186 mm |
| θ | 150 mm |

### Results

| | |
|---|---|
| Azimuth Sun | 104.0° |
| Elevation sun | 44.2° |
| Ec. Time | 3.7 min |
| α | 25.0° |
| β | 50.1 ° |
| D1 | 1499.7 mm |
| D2 | 2775.2 mm |

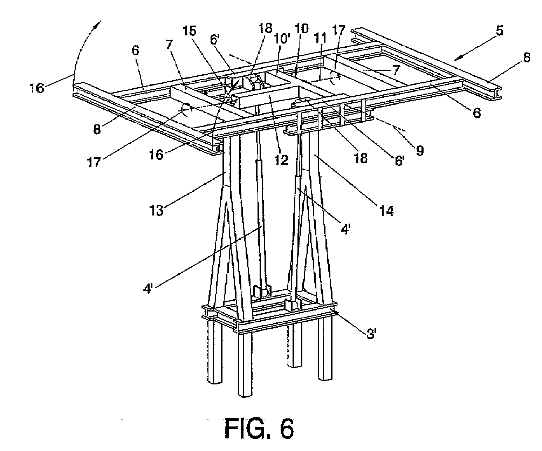

In accordance with one of the ways of achieving the securing of the platform 1, as represented in figures 6 to 9, it can be said that the platform 1 where the solar panels are mounted is created from a frame 5 with a support, on the structure 3', swivel type, permitting a suitable orientation with two degrees of freedom on a central support located in the upper part of the fixed structure 3' of the support for the entire platform 1.

As can be seen, the frame 5 presents stringers 6 and cross-members 7 and 8, and can rotate around the axis 9 which is traversed by the cross-member 10' of a "T" support 10, as a securing element between the platform 1 and the fixed structure 3'.

The ends of the axis 9 are secured to the reinforcements 6' of the stringers 6.

The "T" support 10 can rotate around the axis 11 running along the interior of the vertical core or section 12 of that support 10, due to having the ends of the axis 11 secured to the struts 13 and 14 emerging from the fixed structure 3'. This axis 11, referenced in its geometric axis, can be materialized by two half-axes 15 for securing to the respective struts 13 and 14 of which only the linkage to the support 13 of figure 6 can be seen.

With this arrangement, the frame 5 can be orientated in any direction and angle in order to effect the solar tracking.

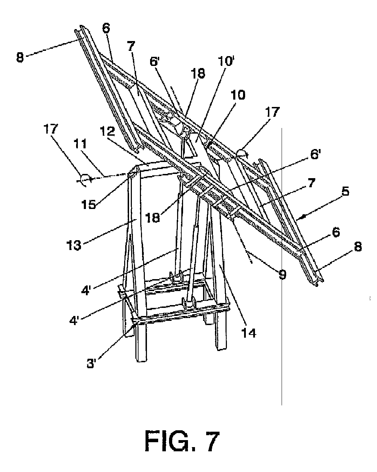

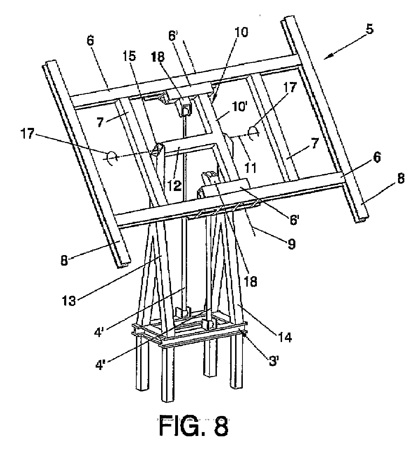

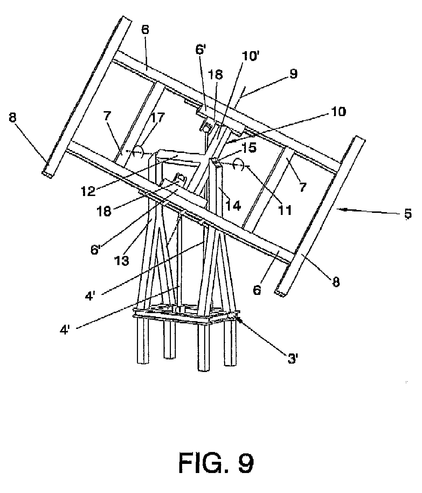

Starting from the position shown in figure 6, the frame 5 can rotate in the direction of the arrows 16, without the "T" support moving, around the geometric axis 9, reaching for example the position of figure 7. If, starting from the same position of figure 6, it were to rotate around the geometric axis 11 in the direction of the arrow 17, the frame 5 would acquire the position of figure 8. These rotations in two axes define combined movements with two degrees of freedom, with the assembly functioning as if the frame 5 were connected in a swivel joint. In figure 9 a position can be seen due to combined rotation around the two axes 9 and 11.

The movements are achieved with just the two cylinders or actuators 4' connected by their lower ends to separate fixed points of the structure 3' and via their upper ends to the securings 18, also of the swivel kind, in order to be able to adopt any angle. Depending on the extension or retraction of the actuators 4' (hydraulic cylinders in this case), varying the distances between the points they join, in both positive and negative values, as appropriate, the position desired for the platform 1 is achieved at each moment.

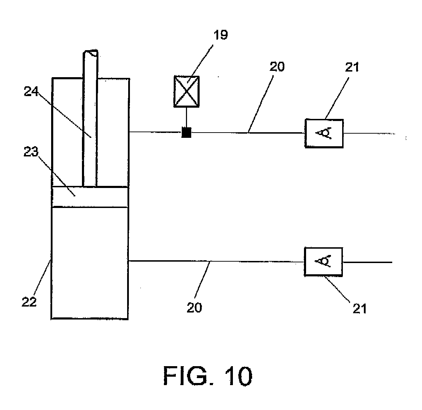

Figure 10 shows a diagram corresponding to the device for prevention of damage occasioned by the wind, which device includes a pressure switch 19 connected to one of the lines 20 corresponding to the hydraulic system intended for supplying the actuators 4 or 4' applied in the solar tracker of the invention, specifically for carrying out the change of position of the solar panels located on the platform in the horizontal location in the presence of strong winds, in other words winds that are above a pre-established value.

Fitted in those hydraulic fluid lines 20 are some non-return valves 21, with the actual hydraulic system including a cylinder 22 and its corresponding piston 23 displaceable in its interior, and linked to the respective rod 24, this cylinder being used by the actuators 4 or 4' via which the transmission of the corresponding movement is carried out.

The device described and shown in those figures 6 to 9 is intended so that, under certain circumstances in which the force of the wind is greater than a predetermined value that could damage the mechanisms of the solar tracker, it acts so that the hydraulic system locates the platform and therefore the solar panels of the solar tracker in a horizontal position, an operation that is carried out after receiving the corresponding signal sent by the pressure switch or switches 19, indicating the exact moment when the platform for the solar panels has to be located horizontally and thereby offer minimum resistance to the wind, thus preventing any possible damage or breakage of the mechanisms of the solar tracker.

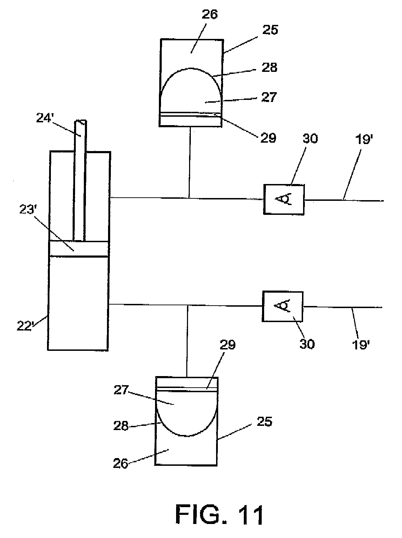

Finally, figure 11 shows the device for regulating the pressure in the hydraulic system for actuation of the platform carrying the solar panels for the solar tracker of the invention, the hydraulic system itself including the corresponding hydraulic fluid lines 19' along with the oil cylinder 22' with the piston 23' and the rod 24' for transmitting the force to the corresponding mechanism for actuation on the platform of the solar tracker.

So, the regulating device itself comprises a pair of oleo-pneumatic dampers 25 defined by separate oleo-pneumatic expansion tanks, in which are established a gas chamber 26 and an oil chamber 27 with the interposition of a deformable membrane 28, the latter in each case constituting the regulating element for the internal pressure of the oleo-pneumatic tank or damper 25, provision having been made for each of those oleo-pneumatic dampers 25 to have a calibrated hole 29 for discharge of the fluid, in this case oil, corresponding to the chamber 27.

The hydraulic fluid lines 19' to which the oleo-pneumatic dampers 25 are connected include respective non-return valves 30.

The oleo-pneumatic dampers 25 are mounted in parallel with the hydraulic fluid lines 19', the calibrated hole 29 being provided for filling and emptying, such that in the event of a sudden increase in pressure in the corresponding hydraulic system, a momentary discharge is possible via that calibrated hole 29 for each oleo-pneumatic damper 25, all of which permits regulation to be carried out of the working pressure in the hydraulic system for movement of the solar tracker under consideration, the movement of the platform and therefore of the solar panels being performed in order to periodically modify the position of the latter and achieve the maximum solar power at each moment.

## Claims

1. **BIDIRECTIONAL SOLAR TRACKER,** of the type formed by a support structure (3 or 3') bearing a platform (1) carrying the solar panels (2) which convert solar energy into electrical energy, varying the orientation of the platform (1) in both azimuth and elevation in order to constantly offer its surface in a direction perpendicular to the solar rays, **characterized in that** the movement for varying the orientation of the platform (1) is achieved by means of two actuators (4 or 4') connected respectively to fixed points (P1o, P2o) on the ground and other vertices (P1, P2) of the platform (1), casing the latter to be able to rotate around a central support point "O" of the same, from an initial position to another final position, with two degrees of freedom due to said two vertices (P1, P2) of the platform (1) being related with two angles α, β of rotation thereof: one of them β around an oblique fixed axis (O-G1) fixed to the ground and forming an angle Φ with the coordinate axis (OY) parallel to the surface of the ground and the other angle α around an axis (O-Az) perpendicular to the previous one, contained In the plane of the platform 1 and which angularly varies its inclination when the latter does so around the oblique fixed axis (O-G1).

2. **BIDIRECTIONAL SOLAR TRACKER,** according to claim 1, **characterized in that** the distances (D1, D2) of the vertices (P1, P2) to the respective fixed points (P1o, P2o) of the ground maintain a one-to-one relation with the angles (α, β) of rotation of the platform (1) around its perpendicular axes (O-C1, O-Az), which determines that, for each pair of angles (α, β), there exists just one pair of said distances (D1, D2) and vice versa.

3. **BIDIRECTIONAL SOLAR TRACKER,** according to the above claims, **characterized in that** the distances (D1, D2) are calculated and determined by the two desired angles (α, β), according to the coordinates of the place, time of year and moment of the day, adjusting and varying them with the actuators (4).

4. **BIDIRECTIONAL SOLAR TRACKER,** according to claim 3, **characterized in that** the actuators (4) are hydraulic cylinders, spindles, or any other mechanical element that can fix the distances (D1, D2).

5. **BIDIRECTIONAL SOLAR TRACKER,** according to claim 3, **characterized in that** the actuators are tracking devices with light-point feedback, with which the angle (β) around the fixed axis (O-G1) manages to be varied with increments of signs opposite to the distances (D1, D2), with a small variation in the other angle (α), and with equal increments of the same sign for variation of the angle (α) around the axis (O-G1), orientable in its angle, perpendicular to the above and which is carried out with a minor variation of the other angle (β) for small movements, which causes the platform (1) to be centered on the light point in a few reiterated alternative movements.

6. **BIDIRECTIONAL SOLAR TRACKER,** according to claim 1, **characterized in that** the platform is constituted on the basis of a frame (5) that is mounted in tilting fashion on a support (10), the actuators (4') being connected to separate points of the actual frame (5), establishing a rotation of said frame (5) and therefore of the platform around a central point, rotating with two degrees of freedom, with the particular feature that the orientation of the corresponding platform in the manner of a swivel joint is effected via the "T" support (10), the cross-member (10') of which is traversed by a transverse axis (9) belonging to the frame (5), being able to rotate with a degree of freedom around it; provision having been made for the vertical core or section (12) of said "T" support (10) to be traversed longitudinally by an axis (11) secured between two struts (13, 14) of the respective fixed structure (3') for supporting the platform, rotating with the second degree of freedom.

7. **BIDIRECTIONAL SOLAR TRACKER,** according to claims 1 and 4, **characterized in that** the corresponding hydraulic system for operating the actuators (4 or 4') incorporates a device for prevention of damage by the wind, the device consisting of one or more pressure switches (19) mounted in the hydraulic fluid line or lines (20), in which participates a cylinder (22) with its piston (23), said pressure switch or switches (19) being fitted in order to provide a signal indicating the exact moment when the movement of the platform carrying the solar panels has to be carried out automatically to the horizontal position of minimum resistance to the strong wind of said platform with the solar panels.

8. **BIDIRECTIONAL SOLAR TRACKER,** according to claims 1 and 4, **characterized in that** the corresponding hydraulic system for operating the actuators (4 or 4') incorporates a pressure regulation device consisting of a pair of oleo-pneumatic dampers (25) with the ability to regulate the sudden loads to which the fixed structure (3 or 3') of the solar tracker is subjected due to the effect of outside agents; with the particular feature that said oleo-pneumatic dampers (25) are connected in parallel with the fluid lines (19') corresponding to the hydraulic system (22'-23').

9. **BIDIRECTIONAL SOLAR TRACKER,** according to claim 8, **characterized in that** the oleo-pneumatic dampers (25) preferably consist of respective oleo-pneumatic expansion tanks.

10. **BIDIRECTIONAL SOLAR TRACKER,** according to claims 8 or 9, **characterized in that** each expansion tank constituting the respective oleo-pneumatic damper (25) includes an internal membrane (28) as a regulating element of the pressure inside the tank, the latter having a calibrated hole (28) for the discharge of the fluid.

11. **BIDIRECTIONAL SOLAR TRACKER,** according to claims 8 to 10, **characterized in that** mounted in the hydraulic fluid lines (19'), to which the oleo-pneumatic dampers (25) are connected, are respective controlled non-return valves (30).
